# EUROPÄISCHE PATENTSCHRIFT

(11) **EP 3 362 692 B1**
(45) Veröffentlichungstag und Bekanntmachung des Hinweises auf die Patenterteilung: **08.02.2023**
(21) Anmeldenummer: 16720814.9
(22) Anmeldetag: 03.05.2016
(51) Int. Cl.: F16B 2/00

(54) **FOLIE ZUR REIBUNGSERHÖHUNG ZWISCHEN ZWEI KRAFTSCHLÜSSIG VERBUNDENEN BAUTEILEN**
FILM FOR INCREASING FRICTION BETWEEN TWO FRICTIONALLY CONNECTED COMPONENTS
FEUILLE DESTINÉE À AUGMENTER LE FROTTEMENT ENTRE DEUX PIÈCES ASSEMBLÉES À FORCE

(30) Priorität: 16.10.2015 DE 102015220169
(43) Veröffentlichungstag der Anmeldung: 22.08.2018
(73) Patentinhaber: Bayerische Motoren Werke Aktiengesellschaft, 80809 München (DE)
(72) Erfinder: BUI, Hoang Viet, 80933 München (DE)
(86) Internationale Anmeldenummer: PCT/EP2016/059804
(87) Internationale Veröffentlichungsnummer: WO 2017/063761

(56) Entgegenhaltungen:
- EP-A1- 2 848 824
- WO-A1-2015/082365
- DE-A1- 19 823 928
- DE-A1-102008 036 796
- DE-A1-102009 023 402
- DE-A1-102010 020 001
- US-B1- 6 524 681

## Beschreibung

Vorliegende Erfindung betrifft eine Folie die zwischen zwei kraftschlüssig verbundenen Bauteilen angeordnet wird. Die Folie erhöht dabei die Reibung zwischen den beiden Bauteilen. Insbesondere handelt es sich dabei um zwei Bauteile eines Kraftfahrzeuges. Des Weiteren betrifft die Erfindung ein Verfahren zum Herstellen der Folie, ein Verfahren zum Verbinden von zwei Bauteilen sowie eine Verbindungsanordnung.

Der Stand der Technik kennt Verfahren zum Aufbringen von Hartpartikeln auf Bauteiloberflächen zur Erhöhung des Reitwertes. Beispielsweise werden Hartpartikel mit einem Bindemittel (zum Beispiel einem Lack) vermischt und auf die entsprechende Oberfläche aufgetragen. Nachteilig dabei ist die Handhabung des Lacks sowie die notwendige Aushärtezeit.

Alternativ ist es auch möglich die Hartpartikel in einem Strahlverfahren, beispielsweise mit dem sogenannten Plasma-Grip Verfahren, direkt auf die Bauteiloberfläche aufzutragen. Hierfür sind jedoch relativ teure und aufwendige Anlagen notwendig.

Ferner zeigt EP 2 848 824 A1 eine reibungserhöhende Folie mit Hartstoff-Partikeln aus einer Titan-Bor-Verbindung, welche derart in eine Polyurethan-Matrix eingebettet sind, dass wenigstens einige der Hartstoff-Partikel aus der Polyurethan-Matrix herausragen.

Weiterhin ist aus DE 10 2008 036 796 A1 ein Verfahren zum Erhöhen der Reibung zwischen reibschlüssig verbundenen Bauteilen bekannt.

DE 10 2010 020 001 A1 zeigt einen Reibbelag zur Drehmomentübertragung mit einem Substrat, einem Bindemittel und reibaktiven Füllstoffen.

DE 198 23 928 A1 zeigt ein Verbindungselement zur kraftschlüssigen Verbindung von Bauteilen mit einer dünnen flexiblen Schicht, die an ihrer Oberfläche Partikel definierter Größe trägt.

US 6 524 681 B1 zeigt ein Reibungsmaterial mit einem Träger, an dessen Vorderfläche eine Reibschicht gebunden ist.

Es ist Aufgabe vorliegender Erfindung eine Möglichkeit zur Reibungserhöhung zwischen zwei kraftschlüssig verbundenen Bauteilen anzugeben, die bei kostengünstiger Herstellung und einfacher Montage eine betriebssichere Erhöhung der Reibung und somit eine Verbesserung der Verbindung ermöglicht.

Die Lösung der Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch eine Folie. Die Folie dient zur Anordnung zwischen zwei kraftschlüssig verbundenen Bauteilen. Die beiden Bauteile können hier und im Folgenden auch als erstes und zweites Bauteil bezeichnet werden.

Vorzugsweise befinden sich die beiden Bauteile in einem Kraftfahrzeug. Beispielsweise wird die Folie zwischen einer Radlagereinheit und einen Radträger angeordnet. Die Folie umfasst eine tragende Matrix. Vorzugsweise ist die Matrix zumindest teilweise aus einem Kunststoff aufgebaut. In diese Matrix ist eine Vielzahl an Hartpartikeln eingelagert. Diese Hartpartikel sind wesentlich härter als die Matrix. Die Hartpartikel bestehen bevorzugt aus einem anderen Material als die Matrix. Die Hartpartikel sorgen für eine Erhöhung der Reibung zwischen den beiden Bauteilen. Bei einer mikroskopischen Betrachtung sorgen die Hartpartikel für einen Formschluss zwischen den beiden Bauteilen.

Erfindungsgemäß ist die Folie derart ausgebildet, dass die Hartpartikel zumindest teilweise aus beiden Oberflächen der Matrix, d.h. aus den zwei gegenüberliegenden Oberflächenseiten der Matrix, herausragen.

Erfindungsgemäß wird der Reibwert zwischen den gegeneinander verspannten Flächen der Bauteile erhöht, indem auf zumindest einer dieser Flächen bereits vor dem Zusammenbau die Folie aufgebracht ist. Die Hartpartikel graben sich dann während des Zusammenbaus, d.h. beim Verspannen im Rahmen der Montage der beiden Bauteile in die jeweils andere (gegenüberliegende) Fläche zumindest teilweise ein.

Beispielsweise an der Verbindungsstelle zwischen einem Radträger mit einem Radlager kann es im Betrieb zu Störgeräuschen bzw. Knackgeräuschen kommen Zur Reduzierung oder Vermeidung dieser Geräusche, wird die Oberflächenbeschaffenheit zumindest eines dieser Bauteile mittels Aufbringung der Folie gezielt angepasst, derart, dass der Reibwert erhöht wird, und zwar durch zusätzlichen Formschluss: im Mikrobereich gesehen furchen sich nämlich beim Verspannen dieser besagten Bauteile gegeneinander die erfindungsgemäß vorgesehenen Hartpartikel in die Oberflächenstruktur des jeweils anderen Bauteils ein und erzeugen quasi einen M ikroformschluss.

Ein entscheidender Vorteil der Folie ist, dass diese, je nach Anwendungsfall, zugeschnitten werden kann und so an die Geometrie der Bauteile angepasst werden kann. Die Folie liegt vorteilhafterweise in Form einer Rolle vor und ist somit ein "Endlosmaterial" das insbesondere bei Kleinserien oder Reparaturarbeiten zur Anwendung kommt.

Erfindungsgemäß ist vorgesehen, dass zumindest eine Seite der Folie eine selbstklebende Schicht aufweist. Diese selbstklebende Schicht ist insbesondere mit einer Deckfolie abgedeckt. Die Deckfolie wird vor dem Aufkleben auf das Bauteil abgezogen. Die selbstklebende Schicht vereinfacht die Montage der Folie auf der Bauteiloberfläche, da beim Zusammensetzen der beiden Bauteile ein verrutschen der Folie vermieden wird.

Bevorzugt ist vorgesehen, dass die Materialien für die Matrix und die Hartpartikel bezüglich eines Kontaktes mit den verbundenen Bauteilen korrosionsneutral sind. Die Bauteile sind insbesondere aus Stahl, Aluminium oder kohlefaserverstärktem Kunststoff. So ermöglicht die erfindungsgemäße Folie eine galvanische Trennung zwischen den beiden Bauteilen. Besonders bevorzugt werden für die Matrix und die Hartpartikel elektrisch nicht leitende Materialien oder edle Metalle gewählt.

Erfindungsgemäß weist die Matrix einen Vliesstoff, Papier, ein Fasergewirr und/oder eine poröse Struktur auf oder besteht aus einem Vliesstoff, aus Papier, aus einem Fasergewirr oder aus einer porösen Struktur.

Des Weiteren ist bevorzugt vorgesehen, dass Hartpartikel aus folgenden Materialien verwendet werden: Siliziumcarbid und/oder Nickel-Siliconcarbid und/oder Nickel-Diamant-Pulver und/oder Stahl und/oder Edelstahlguss (auch: Cr-Grit) und/oder Hartguss und/oder Korund-Partikel. Es können auch unterschiedliche Hartpartikel auf einer Matrix aufgebracht werden.

Dabei ist insbesondere vorgesehen, dass die Hartpartikel eine Größe ("Durchmesser") von mehreren (bspw. 1 - 70) Mikrometern aufweisen und sich nicht nur durch besonders hohe Härte sondern vorzugsweise auch durch ausgesprochen starke Scharfkantigkeit auszeichnen, d.h. es weist deren Oberfläche vorzugsweise eine Vielzahl von Ecken und Kanten auf. Es ist bekannt, dass beispielsweise Siliciumcarbid plasmatechnologisch extrem gut haltbar auf Oberflächen aufgebracht werden kann, vgl. die sog. "Plasma-Grip" Technologie der efc plasma GmbH, Ingolstadt. Dabei sind diese Hartpartikel mittels einer Nickel-Haftvermittlerschicht auf der plasmatechnologisch beschichteten Oberfläche gehalten. Ausdrücklich darauf hingewiesen sei, dass mit der Angabe dieses Beispiels die vorliegende Erfindung jedoch keineswegs auf solche Hartpartikel beschränkt ist; vielmehr können diverse andere Materialien und Verfahren zum Einsatz kommen. Entscheidend ist, dass die Partikel hart genug sind, um zumindest teilweise in die Oberfläche der Bauteile einzudringen. Dabei wird ein Formschluss erzeugt, indem die Hartpartikel anteilig zumindest in das jeweilige Gegenstück gepresst werden. Vergrößert wird weiterhin durch diese Hartpartikel die Gesamtfläche, über welche die beiden Bauteile miteinander in Verbindung stehen, was eine zusätzliche Steigerung der zwischen diesen Bauteilen wirkenden Reib kraft bewirkt.

Vorteilhafterweise ist die erfindungsgemäße Folie als Band ausgestaltet. Das Band zeichnet sich dadurch aus, dass seine Länge zumindest das 10-fache seiner Breite beträgt. Insbesondere liegt das Band als Rolle vor, sodass bei einfacher Handhabung die benötigte Menge abgezogen werden kann. In Verbindung mit der oben beschriebenen selbstklebenden Schicht handelt es sich somit um ein Klebeband.

Des Weiteren wird ein Verfahren zum Verbinden von zwei Bauteilen angegeben. Bei dem Verfahren werden ein erstes Bauteil und ein zweites Bauteil sowie eine hier beschriebene Folie bereitgestellt. Die Folie kann somit ein oder mehrere Merkmale der vorgenannten Ausführungsformen aufweisen. Bei dem Verfahren wird die Folie auf das erste Bauteil aufgebracht. Die Folie kann z.B. auf das erste Bauteil aufgeklebt werden, beispielsweise mit der Seite, welche die selbstklebende Schicht aufweist. Anschließend wird das zweite Bauteil auf der Folie angeordnet, insbesondere auf der dem ersten Bauteil abgewandten Oberfläche der Folie. Danach werden die Bauteile kraftschlüssig verbunden, sodass Hartpartikel der Folie zumindest teilweise in die Oberfläche zumindest eines der Bauteile eindringen. Vorzugsweise dringen Hartpartikel der Folie zumindest teilweise in die Oberfläche des ersten Bauteils und in die Oberfläche des zweiten Bauteils ein. Durch das Eindringen der Hartpartikel in die Oberflächen der Bauteile erhöht sich vorteilhafterweise die Reibung zwischen den beiden Bauteilen.

Gemäß einer weiteren Ausführungsform erfolgt das kraftschlüssige Verbinden der Bauteile nach dem Anordnen des zweiten Bauteils auf der Folie durch ein Verschrauben, Verklemmen und/oder Pressen der Bauteile, wobei Hartpartikel der Folie in eines der Bauteile bzw. in beide Bauteile eindringen.

Gemäß einer weiteren Ausführungsform umfasst die Matrix der Folie eine poröse Struktur, beispielsweise einen Vliesstoff oder einen Dämmstoff. Die poröse Struktur kann eine Vielzahl von Hohlräumen aufweisen. Die Hartpartikel können teilweise oder vollständig in der porösen Struktur eingeschlossen sein. Aufgrund der porösen Struktur der Matrix kann das kraftschlüssige Verbinden bzw. das Verschrauben, Verklemmen und/oder Pressen der Bauteile vereinfacht werden, da sich die poröse Struktur einfach klein pressen lässt. Weiterhin kann die poröse Struktur eine Kapillarwirkung zum Haftungsaufbau an der Oberfläche aufweisen, insbesondere für Flüssigkeiten, wie z.B. ein Ölfilm, auf der Oberfläche des ersten und/oder zweiten Bauteils. Dadurch kann weiterhin vorteilhafterweise auf eine selbstklebende Schicht verzichtet werden.

Die Erfindung umfasst ferner eine Anordnung mit den beiden kraftschlüssig verbundenen Bauteilen und der hier beschriebenen Folie zwischen den beiden Bauteilen. Bei den Bauteilen handelt es sich insbesondere um zwei Bauteile eines Fahrzeuges. Die beiden Bauteile bestehen vorzugsweise aus Stahl, Aluminium (bzw. einer Aluminiumlegierung) oder kohlefaserverstärktem Kunststoff. Die im Rahmen der erfindungsgemäßen Folie beschriebenen vorteilhaften Ausgestaltungen und Unteransprüche finden entsprechend vorteilhafte Anwendung für die erfindungsgemäße Anordnung. Die Anordnung kann insbesondere durch ein vorangehend beschriebenes Verfahren hergestellt werden.

Ferner umfasst die Erfindung ein Verfahren zur Herstellung der beschriebenen Folie. Zunächst erfolgt dabei ein Bereitstellen der Matrix und im weiteren Schritt ein Aufbringen der Hartpartikel in die Matrix. Das Aufbringen der Hartpartikel erfolgt dabei durch Beschleunigen, vorteilhafterweise mit einem Strahlverfahren, oder durch erhöhten Druck.

Bei dem Strahlverfahren werden die Hartpartikel derart beschleunigt, sodass sie zumindest teilweise in die Matrix eindringen. Alternativ dazu ist es möglich die Hartpartikel auch mit entsprechend hohem Druck in die Matrix einzudrücken. Hierzu werden die Hartpartikel beispielsweise auf die Matrix aufgelegt und eingewalzt.

Die Hartpartikel können vollständig oder nur teilweise in die Matrix eindringen. Ausschlaggebend ist, dass die Hartpartikel bis zur Verwendung der Folie in der Matrix verbleiben. Beim Verspannen der beiden Bauteile zueinander wird die Matrix ohnehin deformiert, sodass die Hartpartikel beidseitig aus der Matrix ragen und in die beiden Oberflächen der Bauteile eindringen.

Die im Rahmen der erfindungsgemäßen Folie beschriebenen vorteilhaften Ausgestaltungen und Unteransprüche finden entsprechend vorteilhafte Anwendung für das erfindungsgemäße Verfahren.

Insbesondere ist vorgesehen, dass die Hartpartikel durch eines der folgenden Verfahren aufgebracht werden: Druckstrahlen, Injektionsstrahlen oder Plasmastrahlen. Dabei handelt es sich insbesondere um Plasma-Atmosphärendruckstrahlen oder Niederdruckplasmastrahlen oder Vakuumplasmastrahlen.

Erfindungsgemäß wird auf zumindest einer Seite der Matrix eine selbstklebende Schicht angeordnet. Die selbstklebende Schicht kann sowohl vor als auch nach dem Auftragen der Hartpartikel ausgebildet werden.

Nach dem Aufbringen der Hartpartikel wird die Folie vorteilhafterweise aufgerollt und liegt somit als gerolltes Band oder Klebeband vor.

Weitere Einzelheiten, Merkmale und Vorteile der Erfindung ergeben sich aus der nachfolgenden Beschreibung und den Figuren. Es zeigen:
- Figur 1: eine schematische Ansicht zur Herstellung der erfindungsgemäßen Folie gemäß einem Ausführungsbeispiel, und
- Figur 2: die erfindungsgemäße Folie gemäß dem Ausführungsbeispiel in einer Anordnung mit zwei Bauteilen.

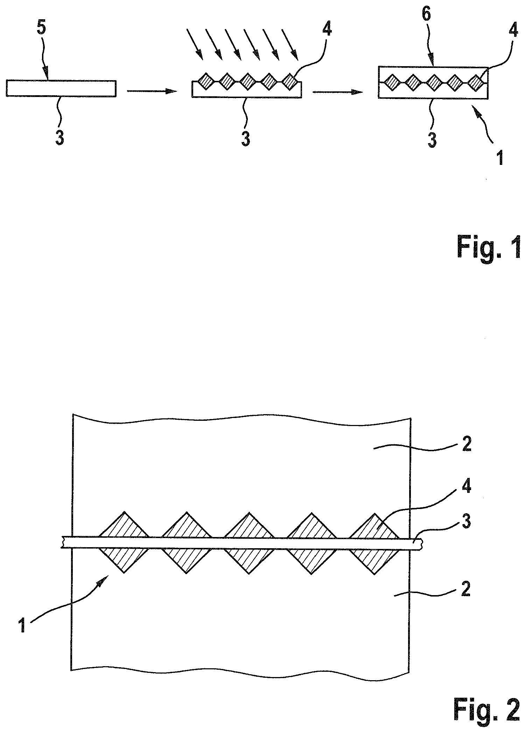

Figur 1 zeigt in einer schematisch vereinfachten Darstellung das erfindungsgemäße Verfahren zur Herstellung einer erfindungsgemäßen Folie 1. Zunächst wird eine Matrix 3 bereitgestellt.

In dieser Matrix wird eine Vielzahl an Hartpartikel 4 eingebracht. Die Darstellung in Figur 1 zeigt ein Strahlverfahren, bei dem die Hartpartikel 4 beschleunigt werden. Beim Auftreffen auf die Matrix 3 dringen die Hartpartikel 4 zumindest teilweise die Matrix 3 ein und sind somit in der Matrix 3 fixiert.

Alternativ zum Strahlverfahren ist es auch möglich, die Hartpartikel 4 auf die Matrix 3 aufzulegen und den Druck der Hartpartikel 4 auf der Matrix 3 zu erhöhen. Dies erfolgt beispielsweise durch Einwalzen der Hartpartikel 4. Auch dadurch ist es möglich, dass die Hartpartikel 4 in die Matrix eindringen.

Im Rahmen der Erfindung ist insbesondere vorgesehen, dass die Hartpartikel 4 nicht durch ein Bindemittel mit der Matrix verbunden werden. Vielmehr dringen die Hartpartikel 4 durch entsprechende Beschleunigung oder erhöhten Druck in die Matrix 3 ein. Die Matrix 3 liegt dabei vorzugsweise in fester Form vor.

In der Darstellung nach Figur 1 weist die Matrix 3 auf einer Seite eine selbstklebende Schicht 5 auf. Nach dem Aufbringen der Hartpartikel 4 wird die selbstklebende Schicht 5 mit einer Deckfolie 6 abgedeckt. Dadurch ist es insbesondere möglich, die Folie 1 zu rollen und als Klebeband bereitzustellen.

Die selbstklebende Schicht 5 muss nicht auf der Seite ausgebildet sein, auf der auch die Hartpartikel 4 aufgebracht werden. Wenn sich die selbstklebende Schicht 5 auf der gegenüberliegenden Seite befindet, kann die Deckfolie 6 auch vor dem Aufbringen der Hartpartikel 4 angebracht werden. Des Weiteren ist es auch möglich, dass die Hartpartikel 4 durch die Deckfolie 6 hindurch in die Matrix 3 eindringen.

Figur 2 zeigt die erfindungsgemäße Anordnung aus zwei Bauteilen 2 und der dazwischen angeordneten Folie 1. Die beiden Bauteile 2 sind insbesondere zwei kraftschlüssig verbundene Bauteile 2 eines Kraftfahrzeuges.

Durch das kraftschlüssige Verbinden der beiden Bauteile 2 dringen die Hartpartikel 4 in die beiden Oberflächen der Bauteile 2 ein. Dadurch erhöht sich die Reibung zwischen den beiden Bauteilen 2.

Wenn, wie in Figur 1 dargestellt, die Hartpartikel 4 nicht beidseitig aus der Matrix 3 ragen, wird die Matrix 3 bei der Montage der beiden Bauteile 2 deformiert, sodass die Hartpartikel 4 beidseitig in die Bauteile 2 eindringen können.

### Bezugszeichenliste:

- 1: Folie
- 2: Bauteile
- 3: Matrix
- 4: Hartpartikel
- 5: Selbstklebende Schicht
- 6: Deckfolie

## Patentansprüche

1. Folie (1) zur Anordnung und Reibungserhöhung zwischen zwei kraftschlüssig verbundenen Bauteilen (2), insbesondere eines Fahrzeuges, mit einer tragenden Matrix (3) und einer Vielzahl an Hartpartikeln (4) die in der Matrix (3) angeordnet sind, wobei zumindest eine Seite der Folie (1) eine selbstklebende Schicht (5) zum Aufkleben auf eines der beiden Bauteile (2) aufweist, und wobei die Hartpartikel zumindest teilweise aus beiden Oberflächen der Matrix herausragen, **dadurch gekennzeichnet, dass** die Matrix (3) einen Vliesstoff, Papier, ein Fasergewirr und/oder eine poröse Struktur aufweist, oder dass die Matrix (3) aus einem Vliesstoff, aus Papier, aus einem Fasergewirr oder aus einer porösen Struktur besteht.

2. Folie nach Anspruch 1, **dadurch gekennzeichnet, dass** die Materialien für die Matrix (3) und die Hartpartikel (4) bezüglich eines Kontaktes mit Stahl, Aluminium oder Kohlefasern korrosionsneutral sind.

3. Folie nach einem der vorhergehenden Ansprüche, **dadurch gekennzeichnet, dass** Hartpartikel (4) aus folgenden Materialien verwendet werden: Siliziumcarbid und/oder Nickel-Siliconcarbid und/oder Nickel-Diamant-Pulver und/oder Stahl und/oder Edelstahlguss (auch: Cr- Grit) und/oder Hartguss und/oder Korund-Partikel.

4. Folie nach einem der vorhergehenden Ansprüche, **dadurch gekennzeichnet, dass** die Folie (1) als Band ausgebildet ist, wobei eine Länge der Folie (1) zumindest das 10-fache einer Breite der Folie (1) beträgt.

5. Verfahren zur Herstellung einer Folie (1) nach einem der vorhergehenden Ansprüche, umfassend die folgenden Schritte: (i) Bereitstellen der Matrix (3), (ii) Aufbringen der Hartpartikel (4) in die Matrix (3) durch Beschleunigen der Hartpartikel (4) oder erhöhten Druck, sodass die Hartpartikel (4) zumindest teilweise in die Matrix (3) eindringen, derart, dass die Hartpartikel zumindest teilweise aus beiden Oberflächen der Matrix herausragen, und wobei auf zumindest einer Seite der Matrix (3) eine selbstklebende Schicht (5) angeordnet wird, **dadurch gekennzeichnet, dass** die Matrix (3) einen Vliesstoff, Papier, ein Fasergewirr und/oder eine poröse Struktur aufweist, oder dass die Matrix (3) aus einem Vliesstoff, aus Papier, aus einem Fasergewirr oder aus einer porösen Struktur besteht.

6. Verfahren nach Anspruch 5, **dadurch gekennzeichnet dass** die Hartpartikel (4) durch ein Strahlverfahren, insbesondere durch eines der folgenden Verfahren aufgebracht werden:
- Druckstrahlen,
- Injektionsstrahlen oder
- Plasmastrahlen, vorzugsweise Plasma-Atmosphärendruckstrahlen, Niederdruckplasmastrahlen oder Vakuumplasmastrahlen.

7. Verfahren nach einem der Ansprüche 5 oder 6, **dadurch gekennzeichnet, dass** die Folie (1) nach dem Aufbringen der Hartpartikel (4) aufgerollt wird.

8. Verfahren zum Verbinden von zwei Bauteilen (2), aufweisend die folgenden Schritte:
- Bereitstellen eines ersten Bauteils und eines zweiten Bauteils,
- Bereitstellen einer Folie (1) gemäß einem der Ansprüche 1 bis 4,
- Aufbringen der Folie (1) auf das erste Bauteil,
- Anordnen des zweiten Bauteils auf der Folie (1),
- Kraftschlüssiges Verbinden der Bauteile, so dass Hartpartikel (4) der Folie (1) zumindest teilweise in die Oberfläche des ersten Bauteils und zumindest teilweise in die Oberfläche des zweiten Bauteils eindringen.

9. Verbindungsanordnung, aufweisend
- ein erstes Bauteil (2),
- ein zweites Bauteil (2),
- eine Folie (1) gemäß einem der Ansprüche 1 bis 4,
- wobei das erste Bauteil durch ein Verfahren gemäß Anspruch 8 mittels der Folie (1) mit dem zweiten Bauteil verbunden ist.

## Claims

1. Film (1) for arranging and increasing the friction between two frictionally joined components (2), in particular of a motor vehicle, having a load-bearing matrix (3) and a plurality of hard particles (4) arranged in the matrix (3), wherein at least one side of the film (1) has a self-adhesive layer (5) for adhesive bonding onto one of the two components (2) and wherein the hard particles at least partially protrude from both surfaces of the matrix, **characterized in that** the matrix (3) comprises a nonwoven, paper, entangled fibers and/or a porous structure or **in that** the matrix (3) consists of a nonwoven, of paper, of entangled fibers or of a porous structure.

2. Film according to Claim 1, **characterized in that** the materials for the matrix (3) and the hard particles (4) are corrosion-neutral in respect of contact with steel, aluminum or carbon fibers.

3. Film according to either of the preceding claims, **characterized in that** hard particles (4) composed of the following materials are used: silicon carbide and/or nickel-silicon carbide and/or nickel-diamond powder and/or steel and/or cast stainless steel (also: Cr grit) and/or chilled cast iron and/or α-alumina particles.

4. Film according to any of the preceding claims, **characterized in that** the film (1) is configured as a tape, with a length of the film (1) being at least 10 times a width of the film (1).

5. Process for producing a film (1) according to any of the preceding claims, which comprises the following steps: (i) provision of the matrix (3), (ii) application of the hard particles (4) to the matrix (3) by acceleration of the hard particles (4) or elevated pressure so that the hard particles (4) penetrate at least partially into the matrix (3) in such a way that the hard particles at least partially protrude from both surfaces of the matrix and wherein a self-adhesive layer (5) is arranged on at least one side of the matrix (3), **characterized in that** the matrix (3) comprises a nonwoven, paper, entangled fibers and/or a porous structure or **in that** the matrix (3) consists of a nonwoven, of paper, of entangled fibers or of a porous structure.

6. Process according to Claim 5, **characterized in that** the hard particles (4) are applied by a blasting process, in particular by one of the following processes:
- pressure blasting,
- injection blasting or
- plasma blasting, preferably atmospheric-pressure plasma blasting, low-pressure plasma blasting or vacuum plasma blasting.

7. Process according to either of Claims 5 or 6, **characterized in that** the film (1) is rolled up after application of the hard particles (4).

8. A method for joining two components (2), which comprises the following steps:
- provision of a first component and a second component,
- provision of a film (1) as claimed in any of claims 1 to 4,
- application of the film (1) to the first component,
- arrangement of the second component on the film (1),
- frictional joining of the components so that hard particles (4) of the film (1) penetrate at least partly into the surface of the first component and at least partly into the surface of the second component.

9. A joining arrangement comprising
- a first component (2),
- a second component (2),
- a film (1) as claimed in any of claims 1 to 4,
- wherein the first component is joined to the second component by a method as claimed in claim 8 by means of the film (1).

## Revendications

1. Feuille (1) destinée à être disposée entre deux composants assemblés à force (2), en particulier d'un véhicule, et destinée à augmenter le frottement entre ceux-ci, comprenant une matrice de support (3) et une pluralité de particules dures (4) qui sont disposées dans la matrice (3), au moins un côté de la feuille (1) présentant une couche autoadhésive (5) à coller sur l'un des deux composants (2), et dans laquelle les particules dures dépassent au moins partiellement des deux surfaces de la matrice,
**caractérisée en ce que** la matrice (3) présente un tissu non-tissé, du papier, un enchevêtrement de fibres et/ou une structure poreuse, ou **en ce que** la matrice (3) est composée d'un tissu non-tissé, de papier, d'un enchevêtrement de fibres ou d'une structure poreuse.

2. Feuille selon la revendication 1, **caractérisée en ce que** les matériaux pour la matrice (3) et les particules dures (4) sont neutres à la corrosion concernant un contact avec de l'acier, de l'aluminium ou des fibres de carbone.

3. Feuille selon l'une quelconque des revendications précédentes, **caractérisée en ce que** des particules dures (4) des matériaux suivants sont utilisées : carbure de silicium et/ou nickel et carbure de silicium et/ou nickel et poudre de diamant et/ou acier et/ou fonte d'acier inoxydable (également : grit de Cr) et/ou fonte trempée et/ou particules de corindon.

4. Feuille selon l'une quelconque des revendications précédentes, **caractérisée en ce que** la feuille (1) est réalisée sous forme de bande, une longueur de la feuille (1) étant au moins 10 fois une largeur de la feuille (1).

5. Procédé de fabrication d'une feuille (1) selon l'une quelconque des revendications précédentes, comprenant les étapes suivantes consistant à : (i) fournir la matrice (3), (ii) appliquer les particules dures (4) dans la matrice (3) par accélération des particules dures (4) ou par une pression accrue de sorte que les particules dures (4) pénètrent au moins partiellement dans la matrice (3) de telle sorte que les particules dures dépassent au moins partiellement des deux surfaces de la matrice, et dans lequel une couche autoadhésive (5) est disposée sur au moins un côté de la matrice (3),
**caractérisé en ce que** la matrice (3) présente un tissu non-tissé, du papier, un enchevêtrement de fibres et/ou une structure poreuse, ou **en ce que** la matrice (3) est composée d'un tissu non-tissé, de papier, d'un enchevêtrement de fibres ou d'une structure poreuse.

6. Procédé selon la revendication 5, **caractérisé en ce que** les particules dures (4) sont appliquées par un procédé de projection, en particulier par l'un des procédés suivants :
- projection sous pression,
- projection par injection, ou
- projection de plasma, de préférence projection de plasma sous pression atmosphérique, projection de plasma basse pression ou projection de plasma sous vide.

7. Procédé selon l'une quelconque des revendications 5 ou 6, **caractérisé en ce que** la feuille (1) est enroulée après l'application des particules dures (4).

8. Procédé permettant d'assembler deux composants (2), présentant les étapes suivantes consistant à :
- fournir un premier composant et un deuxième composant,
- fournir une feuille (1) selon l'une quelconque des revendications 1 à 4,
- appliquer la feuille (1) au premier composant,
- disposer le deuxième composant sur la feuille (1),
- assembler les composants à force de sorte que les particules dures (4) de la feuille (1) pénètrent au moins partiellement dans la surface du premier composant et au moins partiellement dans la surface du deuxième composant.

9. Agencement d'assemblage, présentant
- un premier composant (2),
- un deuxième composant (2),
- une feuille (1) selon l'une quelconque des revendications 1 à 4,
- dans lequel le premier composant est assemblé avec le deuxième composant par un procédé selon la revendication 8 au moyen de la feuille (1).
